(19) Europäisches Patentamt
European Patent Office
Office européen des brevets

(11) **EP 4 764 826 A1**

(12) **EUROPEAN PATENT APPLICATION**
published in accordance with Art. 153(4) EPC

(43) Date of publication:
24.06.2026 Bulletin 2026/26

(21) Application number: 24857725.6

(22) Date of filing: 21.03.2024

(51) International Patent Classification (IPC):
**G06F 8/41** (2018.01)

(52) Cooperative Patent Classification (CPC):
**G06F 8/41; G06F 17/16**

(86) International application number:
**PCT/CN2024/082998**

(87) International publication number:
**WO 2025/044173 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 30.08.2023 CN 202311128725

(71) Applicant: HUAWEI TECHNOLOGIES CO., LTD.
Shenzhen 518129 (CN)

(72) Inventors:
• YANG, Yang
  Shenzhen, Guangdong 518129 (CN)
• GUO, Yipeng
  Shenzhen, Guangdong 518129 (CN)
• HAN, Xiaolei
  Shenzhen, Guangdong 518129 (CN)

(74) Representative: Epping - Hermann - Fischer
Patentanwaltsgesellschaft mbH
Schloßschmidstraße 5
80639 München (DE)

(54) **CODE VECTORIZATION METHOD AND APPARATUS**

(57) Embodiments of this application provide a code vectorization method and apparatus, relating to the field of
Embodiments of this application provide a code vectorization method and apparatus, relating to the field of computer technologies. The method includes: obtaining attribute information of multidimensional loop code that includes a plurality of pieces of single-level loop code, and determining, based on the attribute information, a hardware logic level corresponding to each level of target loop code in the multidimensional loop code, where one level of target loop code is a piece of single-level loop code to be vectorized; splitting each level of target loop code based on a length upper limit of the hardware logic level corresponding to the level of target loop code to obtain a plurality of code blocks, and combining the plurality of code blocks into a plurality of pieces of multidimensional subloop code based on a level relationship between hardware logic levels corresponding to the plurality of code blocks; and updating, based on the plurality of pieces of multidimensional subloop code and the attribute information, the multidimensional loop code to a vector instruction used by a vector computing unit to perform vector computing. In embodiments of this application, the multidimensional loop code can be vectorized without being limited by a form of a loop upper bound, to improve computing efficiency.

FIG. 3

## Description

This application claims priority to Chinese Patent Application No. 202311128725.4, filed with the China National Intellectual Property Administration on August 30, 2023 and entitled "CODE VECTORIZATION METHOD AND APPARATUS", which is incorporated herein by reference in its entirety.

## TECHNICAL FIELD

Embodiments of this application relate to the field of computer technologies, and in particular, to a code vectorization method and apparatus.

## BACKGROUND

In a computationally intensive service, such as magnetic field simulation, voice interaction, or computer vision, code used to implement the service may be vectorized to improve computing efficiency. The vectorization may include converting scalars in the code into a vector during compilation of the code. In this way, a vector computing unit in hardware (for example, an artificial intelligence (artificial intelligence, AI) chip) having a vector computing capability may compute the vector in one pulse (for example, one clock cycle) to perform parallel computing on a plurality of scalars, thereby improving computing efficiency.

In the related technology, loop code in code is usually a source of intensive computation and may be vectorized as described above. For example, some chips support vectorization of multidimensional loop code, namely, nested loops. When it is determined that a loop upper bound (which is a value representing an upper limit of a loop range and can be used to calculate a loop count) of each level of loop in the multidimensional loop code is a constant, that is, the multidimensional loop code implements a loop with a static shape, and a loop count of each level of loop satisfies a length upper limit of a vector computing unit, a vector instruction may be generated based on a mask of the loop code and a stride between memory addresses accessed by computing in the loop code, and the loop code may be directly replaced with the vector instruction, so that the vector computing unit performs vector computing.

However, in a specific service, most multidimensional loop code implements a loop with a dynamic shape. An upper bound of each level of loop is not a constant, causing the foregoing chip to directly give up vectorizing the loop with the dynamic shape. In addition, in some loops with static shapes, if a loop count of one or more levels of loops exceeds the length upper limit of the vector computing unit, the chip also gives up vectorizing the loops with the static shapes. This can easily lead to vectorization failure.

## SUMMARY

To resolve the foregoing technical problem, this application provides a code vectorization method and apparatus. In the code vectorization method, multidimensional loop code is split and combined to obtain multidimensional subloop code that can be processed by a vector computing unit, to vectorize loop code with any loop count, prevent vectorization failure due to a length limit, and improve computing efficiency.

According to a first aspect, an embodiment of this application provides a code vectorization method. The method includes: obtaining attribute information of multidimensional loop code, where the multidimensional loop code includes a plurality of pieces of single-level loop code, and each piece of single-level loop code in the plurality of pieces of single-level loop code is used to implement one level of loop in a multi-level loop; determining, based on the attribute information, a hardware logic level corresponding to each level of target loop code in the multidimensional loop code, where each level of target loop code is a piece of single-level loop code to be vectorized in the plurality of pieces of single-level loop code, the plurality of hardware logic levels indicate a multi-level memory access rule of a vector computing unit, and each hardware logic level corresponds to a rule for one level of memory access in the multi-level memory access; splitting each level of target loop code based on a length upper limit of the hardware logic level corresponding to the level of target loop code to obtain a plurality of code blocks, and combining the plurality of code blocks into a plurality of pieces of multidimensional subloop code based on a level relationship between hardware logic levels corresponding to the plurality of code blocks; and updating the multidimensional loop code to a vector instruction based on the plurality of pieces of multidimensional subloop code and the attribute information, where the vector instruction is used by the vector computing unit to perform vector computing.

In embodiments of this application, each level of loop code in the multidimensional loop code is split into the plurality of code blocks based on the length upper limit of the hardware logic level in the vector computing unit. The plurality of code blocks are combined into a plurality of multidimensional subloops based on the level relationship between the hardware logic levels in the vector computing unit, to ensure that a dimension and length of each piece of multidimensional subloop code satisfy processing conditions of the hardware logic levels. On this basis, the multidimensional loop code may be updated to the vector instruction. In this way, vectorization of the multidimensional loop code is not limited by a length of any level of loop and whether a shape is static or dynamic, to prevent vectorization failure and improve computing efficiency.

According to the first aspect, the attribute information includes a level relationship between the plurality of pieces of single-level loop code. Determining, based on the attribute information, the hardware logic level corresponding to each level of target loop code in the multidimensional loop code includes: determining the plurality of pieces of single-level loop code in the multidimensional loop code based on the level relationship between the plurality of pieces of single-level loop code; reading a mapping parameter that is set by a user in a preset interface, where the mapping parameter indicates a hardware logic level used by each level of target loop code; and allocating a hardware logic level to each level of target loop code in the multidimensional loop code based on the mapping parameter and the plurality of pieces of single-level loop code.

In embodiments of this application, the user may control a mapping relationship between the target loop code in the multidimensional loop code and the hardware logic level through the preset interface for preferential vectorization of a long loop, to increase an amount of data computed by each vector instruction and improve computing performance. In other words, the user may perceive a loop count in service code to determine a more accurate mapping relationship, that is, select a loop matching manner with better computing performance. This addresses potential loss of performance optimization caused by inability to perceive the loop count due to a dynamic shape in a compilation process. Even for the dynamic shape, the user may have a value range for a length, to prevent a short loop from being placed at an inner level of the loop or participating in vectorization.

According to any one of the first aspect or the foregoing implementations of the first aspect, the attribute information includes a loop upper bound of each piece of single-level loop code and a level relationship between the plurality of pieces of single-level loop code. Determining, based on the attribute information, the hardware logic level corresponding to each level of target loop code in the multidimensional loop code includes: determining the plurality of pieces of single-level loop code in the multidimensional loop code based on the level relationship between the plurality of pieces of single-level loop code; allocating a hardware logic level to each level of target loop code whose loop upper bound is a constant in the plurality of pieces of single-level loop code based on the loop upper bound of each piece of single-level loop code, a length upper limit of each hardware logic level, and the plurality of pieces of single-level loop code; and allocating a hardware logic level to each level of target loop code whose loop upper bound is a variable in the plurality of pieces of single-level loop code based on the loop level relationship between the plurality of pieces of single-level loop code and a level relationship between the plurality of hardware logic levels by using an allocation rule that a loop level of the target loop code matches a level of the hardware logic level.

In embodiments of this application, for a scenario in which the user does not set a mapping relationship between the target loop code and the hardware logic level, the mapping relationship between the target loop code and the hardware logic level is determined based on different cases in which a loop upper bound of a loop implemented by the target loop code is a constant and a variable and in combination with a constraint of the hardware logic level, to further expand an applicable scope, reduce vectorization failure, and improve computing efficiency.

According to any one of the first aspect or the foregoing implementations of the first aspect, combining the plurality of code blocks into the plurality of pieces of multidimensional subloop code based on the level relationship between the hardware logic levels corresponding to the plurality of code blocks includes: combining one of the plurality of code blocks corresponding to each level of target loop code into a piece of multidimensional subloop code based on a combination rule that a loop level in a multidimensional subloop implemented by each piece of multidimensional subloop code in the multidimensional subloop code matches a level relationship between hardware logic levels corresponding to the piece of multidimensional subloop code, until the plurality of code blocks corresponding to each level of target loop code are combined, to obtain the multidimensional subloop code.

In embodiments of this application, one code block is selected from each target loop level and combined into one piece of multidimensional subloop code based on the level relationship between the hardware logic levels corresponding to the code blocks, until all code blocks are combined, to obtain the plurality of pieces of multidimensional subloop code. This can avoid that the combination does not conform to an original loop structure and excessive combination results, to ensure loop correctness of multidimensional subloops obtained through combination and theoretically minimize a quantity of subloops and a quantity of vector instructions, thereby further improving computing efficiency.

According to any one of the first aspect or the foregoing implementations of the first aspect, the attribute information includes a memory access stride of each piece of single-level loop code. Updating the multidimensional loop code to the vector instruction based on the plurality of pieces of multidimensional subloop code and the attribute information includes: generating a vector instruction of each piece of multidimensional subloop code in the plurality of pieces of multidimensional subloop code by performing the following operations: generating a mask of an innermost level of subloop code in the multidimensional subloop code based on a length upper limit of a hardware logic level corresponding to the innermost level of subloop code and a loop count of a loop implemented by the innermost level of subloop code; starting from an outer level of subloop code of the innermost level of subloop code in the multidimensional subloop code, generating a mask of a current level of subloop code based on a length upper limit of a hardware logic level corresponding to an inner level of subloop code, a length upper limit of a hardware logic level corresponding to the current level of subloop code, a mask of the inner level of subloop code, and a loop count of the current level of subloop code, until a mask of each piece of subloop code in the multidimensional subloop code is generated, to obtain a mask of the multidimensional subloop code, where the mask of the multidimensional subloop code indicates attribute information of subloop code, in the multidimensional subloop code, whose loop count is less than a length upper limit of a hardware logic level corresponding to the multidimensional subloop code; generating the vector instruction of the multidimensional subloop code based on the stride of each level of target loop code corresponding to the multidimensional subloop code and the mask of the multidimensional subloop code; and replacing the multidimensional loop code with the vector instruction of each piece of multidimensional subloop code in the plurality of pieces of multidimensional subloop code.

In embodiments of this application, the mask (mask) is a form of a register. A part that is not vectorized may be masked by setting the mask, to avoid a computing exception caused by incorrect modification to a memory. This can ensure correctness of a tail block during vectorization of a multidimensional loop with a dynamic shape. In addition, in a scenario of multidimensional loop code, the mask can be quickly generated in a manner of extending from inner to outer and filling in a mask of an inner level based on a loop count of a current level, to further improve computing efficiency.

According to any one of the first aspect or the foregoing implementations of the first aspect, splitting each level of target loop code based on the length upper limit of the hardware logic level corresponding to the level of target loop code to obtain the plurality of code blocks includes: splitting, based on the length upper limit of the hardware logic level corresponding to each level of target loop code, the level of target loop code into a non-tail block whose loop count is an integer multiple of the length upper limit of the corresponding hardware logic level and a tail block whose loop count is less than the length upper limit of the corresponding hardware logic level.

In embodiments of this application, the multidimensional loop code is split based on the length upper limit of the hardware logic level. This ensures that a multidimensional subloop subsequently obtained through combination based on a splitting result can be processed by the vector computing unit, to prevent vectorization failure.

According to a second aspect, an embodiment of this application provides a code vectorization apparatus. The apparatus includes: a parsing and mapping module, configured to obtain attribute information of multidimensional loop code, where the multidimensional loop code includes a plurality of pieces of single-level loop code, and each piece of single-level loop code in the plurality of pieces of single-level loop code is used to implement one level of loop in a multi-level loop; and determine, based on the attribute information, a hardware logic level corresponding to each level of target loop code in the multidimensional loop code, where each level of target loop code is a piece of single-level loop code to be vectorized in the plurality of pieces of single-level loop code, the plurality of hardware logic levels indicate a multi-level memory access rule of a vector computing unit, and each hardware logic level corresponds to a rule for one level of memory access in the multi-level memory access; a loop splitting module, configured to split each level of target loop code based on a length upper limit of the hardware logic level corresponding to the level of target loop code to obtain a plurality of code blocks, and combine the plurality of code blocks into a plurality of pieces of multidimensional subloop code based on a level relationship between hardware logic levels corresponding to the plurality of code blocks; and
an instruction replacement module, configured to update the multidimensional loop code to a vector instruction based on the plurality of pieces of multidimensional subloop code and the attribute information, where the vector instruction is used by the vector computing unit to perform vector computing.

According to the second aspect, the attribute information includes a level relationship between the plurality of pieces of single-level loop code. The parsing and mapping module is specifically configured to: determine the plurality of pieces of single-level loop code in the multidimensional loop code based on the level relationship between the plurality of pieces of single-level loop code; read a mapping parameter that is set by a user in a preset interface, where the mapping parameter indicates a hardware logic level used by each level of target loop code; and allocate a hardware logic level to each level of target loop code in the multidimensional loop code based on the mapping parameter and the plurality of pieces of single-level loop code.

According to any one of the second aspect or the foregoing implementations of the second aspect, the attribute information includes a loop upper bound of each piece of single-level loop code and a level relationship between the plurality of pieces of single-level loop code. The parsing and mapping module is specifically configured to: determine the plurality of pieces of single-level loop code in the multidimensional loop code based on the level relationship between the plurality of pieces of single-level loop code; allocate a hardware logic level to each level of target loop code whose loop upper bound is a constant in the plurality of pieces of single-level loop code based on the loop upper bound of each piece of single-level loop code, a length upper limit of each hardware logic level, and the plurality of pieces of single-level loop code; and allocate a hardware logic level to each level of target loop code whose loop upper bound is a variable in the plurality of pieces of single-level loop code based on the loop level relationship between the plurality of pieces of single-level loop code and a level relationship between the plurality of hardware logic levels by using an allocation rule that a loop level of the target loop code matches a level of the hardware logic level.

According to any one of the second aspect or the foregoing implementations of the second aspect, the loop splitting module is specifically configured to: combine one of the plurality of code blocks corresponding to each level of target loop code into a piece of multidimensional subloop code based on a combination rule that a loop level in a multidimensional subloop implemented by each piece of multidimensional subloop code in the multidimensional subloop code matches a level relationship between hardware logic levels corresponding to the piece of multidimensional subloop code, until the plurality of code blocks corresponding to each level of target loop code are combined, to obtain the multidimensional subloop code.

According to any one of the second aspect or the foregoing implementations of the second aspect, the attribute information includes a memory access stride of each piece of single-level loop code. The instruction replacement module is specifically configured to: generate a vector instruction of each piece of multidimensional subloop code in the plurality of pieces of multidimensional subloop code by performing the following operations: generate a mask of an innermost level of subloop code in the multidimensional subloop code based on a length upper limit of a hardware logic level corresponding to the innermost level of subloop code and a loop count of a loop implemented by the innermost level of subloop code; starting from an outer level of subloop code of the innermost level of subloop code in the multidimensional subloop code, generate a mask of a current level of subloop code based on a length upper limit of a hardware logic level corresponding to an inner level of subloop code, a length upper limit of a hardware logic level corresponding to the current level of subloop code, a mask of the inner level of subloop code, and a loop count of the current level of subloop code, until a mask of each piece of subloop code in the multidimensional subloop code is generated, to obtain a mask of the multidimensional subloop code, where the mask of the multidimensional subloop code indicates attribute information of subloop code, in the multidimensional subloop code, whose loop count is less than a length upper limit of a hardware logic level corresponding to the multidimensional subloop code; generate the vector instruction of the multidimensional subloop code based on the stride of each level of target loop code corresponding to the multidimensional subloop code and the mask of the multidimensional subloop code; and replace the multidimensional loop code with the vector instruction of each piece of multidimensional subloop code in the plurality of pieces of multidimensional subloop code.

According to any one of the second aspect or the foregoing implementations of the second aspect, the loop splitting module is specifically configured to: split, based on the length upper limit of the hardware logic level corresponding to each level of target loop code, the level of target loop code into a non-tail block whose loop count is an integer multiple of the length upper limit of the corresponding hardware logic level and a tail block whose loop count is less than the length upper limit of the corresponding hardware logic level.

The second aspect and any one of the implementations of the second aspect respectively correspond to the first aspect and any one of the implementations of the first aspect. For technical effects corresponding to the second aspect and any one of the implementations of the second aspect, refer to technical effects corresponding to the first aspect and any one of the implementations of the first aspect. Details are not described herein again.

According to a third aspect, an embodiment of this application provides an electronic device, including a processor and a memory. The processor and the memory are connected to each other. The memory is configured to store one or more programs. When the one or more programs are executed by the one or more processors, the one or more processors are enabled to implement the method according to any one of the first aspect and the implementations of the first aspect.

According to a fourth aspect, an embodiment of this application provides a computer-readable medium, configured to store a computer program. The computer program includes instructions used to perform the method according to any one of the first aspect or the possible implementations of the first aspect.

According to a fifth aspect, an embodiment of this application provides a computer program. The computer program includes instructions used to perform the method according to any one of the first aspect or the possible implementations of the first aspect.

According to a sixth aspect, an embodiment of this application provides a chip. The chip includes a processing circuit and a transceiver pin. The transceiver pin and the processing circuit communicate with each other by using an internal connection path. The processing circuit performs the method according to any one of the first aspect or the possible implementations of the first aspect, to control a receiving pin to receive a signal, and control a sending pin to send a signal.

## BRIEF DESCRIPTION OF DRAWINGS

To describe the technical solutions in embodiments of this application more clearly, the following briefly describes the accompanying drawings needed for describing embodiments of this application. Apparently, the accompanying drawings in the following description show merely some embodiments of this application, and a person of ordinary skill in the art may still derive other drawings from these accompanying drawings without creative efforts.

FIG. 1 is a block diagram of an application scenario according to an embodiment of this application;
FIG. 2 is a block diagram of a structure of a compiler according to an embodiment of this application;

FIG. 3 is a schematic flowchart of a code vectorization method according to an embodiment of this application;

FIG. 4 is a schematic flowchart of a code vectorization method according to an embodiment of this application; and

FIG. 5 is an example diagram of a mask structure of multidimensional subloop code in a code vectorization method according to an embodiment of this application.

**DESCRIPTION OF EMBODIMENTS**

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification merely describes an association relationship between associated objects, and represents that three relationships may exist. For example, A and/or B may represent the following three cases: Only A exists, both A and B exist, and only B exists.

In the specification and claims in embodiments of this application, the terms "first", "second", and so on are intended to distinguish between different objects but do not indicate a particular order of the objects. For example, a first target object, a second target object, and the like are used for distinguishing between different target objects, but are not used for describing a specific order of the target objects.

In embodiments of this application, "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the term "example", "for example", or the like is intended to present a relative concept in a specific manner.

In descriptions of embodiments of this application, unless otherwise stated, "plurality of" means two or more. For example, a plurality of processing units mean two or more processing units, and a plurality of systems mean two or more systems.

For ease of understanding the embodiments, some technical terms and background technologies in the embodiments are first described.

Multidimensional loop: It is a loop structure formed by nesting a plurality of loops. Operations such as computing and memory access in the multidimensional loop may be related to an iteration position of any one or more levels of loops in the multidimensional loop.

Automatic vectorization: It is an optimization method that integrates scalar computing in code into vector computing. A vector computing unit of a chip can be invoked to compute a plurality of pieces of scalar data in one pulse (for example, one clock cycle), which is equivalent to performing batch computing in one pulse. Scalar computing means performing computing once in one pulse.

Dynamic shape: A shape of an input target is a dynamic variable, which is unknown at compile time, that is, during a compilation period. It describes variables in a loop that represent a loop upper bound and an iteration count.

Vector instruction: Some platforms, such as computers, are equipped with a fully functional vector operation instruction system. A basic operation object of the vector instruction is a vector, which is a group of numbers arranged in order. If an instruction is a vector operation, namely, a vector instruction, the instruction determines an address (a start address of a main memory or a vector register number) of a vector operand, and directly or implicitly specifies another vector parameter such as an increment or a vector length. The vector instruction specifies that a processor processes all components in the vector based on a same operation. This can effectively increase a computing speed of a computer.

Loop upper bound: It is a value representing an upper limit of the loop range. The loop upper bound can be used to calculate a loop count and the like.

Intermediate representation (intermediate representation, IR): It may also be referred to as intermediate code. A frontend module in a compiler performs lexical analysis, syntactic analysis, and semantic analysis on an input program, to generate an intermediate expression form, namely, an intermediate representation. A backend module in the compiler optimizes the IR (for example, Java bytecode) to generate object code (for example, machine code).

Bitmask (BitMask): It may also be referred to a mask (Mask). In computer science, it is a string of binary digits. Specified bits are masked through a bitwise operation with a target number. The bitmask uses a numeric value to record states. For example, each bit (bit) of the numeric value has two values: 0 and 1. Each bit of the numeric value represents one state. The bitmask can be used to express very rich states with very few resources. Based on this, a mask in vectorization indicates data that needs to participate in computing in vector computing. A bit whose value is 0 in the mask represents that corresponding data does not participate in computing. A bit whose value is 1 represents that corresponding data participates in computing.

In service code, loop code used to implement loop logic may be one-dimensional or multidimensional. For example, one-dimensional loop code, namely, single-level loop code, may be code shown in Table 1-1.

| Table 1-1 Example of one-dimensional loop code |
| --- |
| for(i = 0; i < n; ++i ) {...} |

When memory addresses accessed by computing in loop code are contiguous, that is, memory access is contiguous, the foregoing one-dimensional loop code can be directly split based on a length upper limit (for example, LIMIT) of a vector computing unit. After the splitting, each segment of loop code satisfies a length of the vector computing unit in hardware, except for the last segment, namely, a tail block, which may be shorter than the length. For example, in Table 1-1, the one-dimensional loop code with a length of n may be split as follows: n = x × LIMIT + y. x × LIMIT indicates a loop whose length is x. y is a tail block. Each iteration is to compute data with a length of LIMIT in the loop. The computing of the LIMIT-length data may be converted into a vector instruction, that is, vectorized. In this way, a loop upper bound n can be a dynamic variable. Even if the length upper limit of the vector computing unit in the hardware is exceeded, the loop code can still be processed by the vector computing unit. Based on this, for multidimensional loop code, when memory access by computing in the multidimensional loop code is contiguous, the multidimensional loop code may be collapsed into one-dimensional loop code, and then vectorization is implemented through the foregoing one-dimensional loop code processing method.

However, in a specific service scenario, most loop code is multidimensional and not completely contiguous, and thus cannot be collapsed. Therefore, the foregoing approach of collapse followed by splitting remains prone to vectorization failure, resulting in a slight improvement in computing performance. In a scenario of multidimensional loop code, if a loop count of an innermost level of loop code in the multidimensional loop code is less than the length upper limit of the vector computing unit, vectorized computing is limited, leading to a more significant loss of computing performance.

For example, multidimensional loop code, namely, multi-level loop code, may be code shown in Table 1-2.

| Table 1-2 Example of multidimensional loop code |
| --- |
| for i in [0...8)<br>        for j in [0...8)<br>                for k in [0...8) {...} |

When multidimensional loop code implements a loop with a fully static shape, that is, an upper bound of each level of loop is a constant known by a compiler, such as in [0...8) shown in Table 1-2, a length of each level of loop in the multidimensional loop code satisfies the length upper limit of the vector computing unit, and the vector computing unit supports vectorization of nested loops, vectorization can be implemented by directly replacing the loop with a vector instruction without modifying the loop.

However, in specific services, most loops have dynamic shapes. The vectorization method for the example in Table 1-2 can only optimize loops with static shapes and directly gives up optimizing loops with dynamic shapes. In addition, not all loops with static shapes can be optimized. Vectorization can be performed only when a length of each level of loop does not exceed a dimension length limit of a corresponding vector computing unit in hardware. If a loop count of one or more levels of loops exceeds the limit, vectorization of the entire loop is given up. Due to the two reasons, few loops in service code can be vectorized, resulting in vectorization failure and a limited improvement in computing performance.

Embodiments of this application provide a code vectorization method to resolve the foregoing problem. In the method, each level of loop code in multidimensional loop code is split into a plurality of code blocks based on a length upper limit of a hardware logic level in a vector computing unit. The plurality of code blocks are combined into a plurality of multidimensional subloops based on a level relationship between hardware logic levels in the vector computing unit, to ensure that a dimension and length of each piece of multidimensional subloop code satisfy processing conditions of the hardware logic levels. On this basis, the multidimensional loop code may be updated to a vector instruction. In this way, vectorization of a multidimensional loop is not limited by a length of any level of loop and whether a shape is static or dynamic, to prevent vectorization failure and improve computing efficiency.

Before the technical solutions in embodiments of this application are described, an application scenario of the code vectorization method in embodiments of this application is first described with reference to the accompanying drawings. Embodiments of this application may be applied to an AI or HPC (high-performance computing, high-performance computing) service scenario requiring high real-time performance, or may be applied to a service scenario requiring large-scale data computing, such as meteorological analysis or magnetic field simulation and computing. The code vectorization method provided in embodiments of this application may be applied to any logic involving intensive multidimensional loop computation in computing. In a specific implementation process, embodiments of this application may be applied to a compiler or hardware having a multidimensional vector computing capability. For example, the compiler may be an independent software product without being embedded in a hardware module. During running, program code of the compiler may be run in a host memory of a server, and a compiled binary may be executed in a processor memory. The hardware having the multidimensional vector computing capability may be, for example, various chips such as a GPU and a CPU. In an example, the foregoing chip may support multidimensional strided memory access. Alternatively, in an example, the hardware may be an electronic device including a chip that features a vector computing unit having the multidimensional vector computing capability and supports hardware instructions for multidimensional strided, that is, non-contiguous, memory access, such as a computer, a server, or a computing cluster including a plurality of servers.

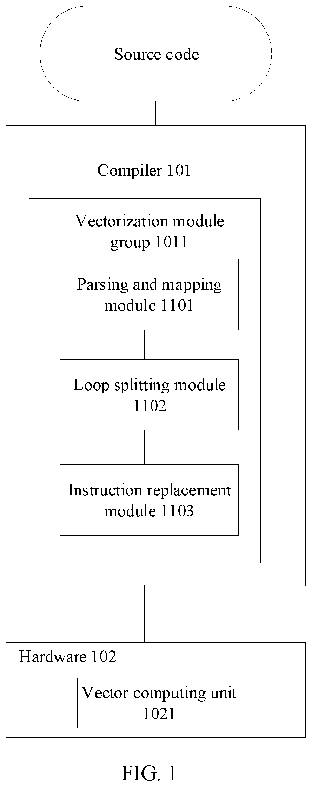

For example, FIG. 1 is a block diagram of an application scenario according to an embodiment of this application. As shown in FIG. 1, embodiments of this application may be applied to a computing platform. The platform may include a compiler 101 and hardware 102.

The compiler 101 is configured to obtain source code written by a developer and perform compilation to generate a binary file executable by the hardware 102. The compiler 101 may specifically include a vectorization module group 1011, configured to vectorize a nested loop in the source code through a parsing and mapping module 1101, a loop splitting module 1102, and an instruction replacement module 1103 before the compiler 101 generates the binary file. The compiler 101 may be further configured to obtain attribute information of the nested loop in the source code, namely, service code.

The parsing and mapping module 1101 is configured to establish a mapping relationship from a code loop to a hardware instruction loop.

The loop splitting module 1102 is configured to split the loop and construct a loop conforming to a constraint of the hardware 102.

The instruction replacement module 1103 is configured to replace the loop conforming to the constraint of the hardware 102 with a vector instruction of the hardware.

The hardware 102 specifically processes the vector instruction through a vector computing unit 1021. The constraint of the hardware 102 is a length upper limit of the vector computing unit 1021. It may be understood that during specific application, the compiler 101 may convert the vector instruction into a binary file, and the hardware 102 processes a vector instruction in a binary form.

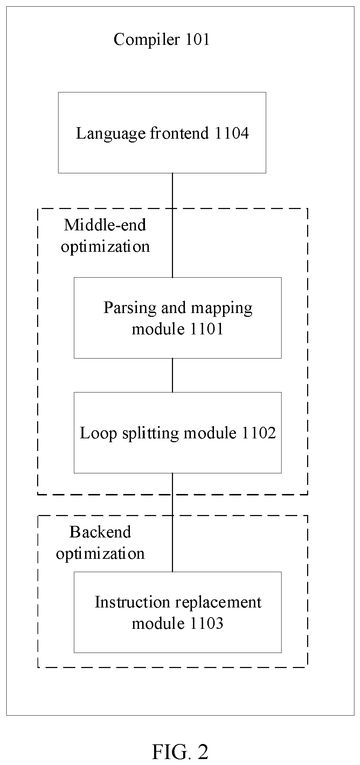

In an example, FIG. 2 is a block diagram of a structure of a compiler according to an embodiment of this application. As shown in FIG. 2, the compiler may include a language frontend 1104, a parsing and mapping module 1101, a loop splitting module 1102, and an instruction replacement module 1103.

The language frontend 1104 is configured to obtain attribute information of multidimensional loop code used to implement a multi-level loop in service code. The multidimensional loop code includes a plurality of pieces of single-level loop code, each used to implement one level of loop in the multi-level loop.

The parsing and mapping module 1101 is configured to determine, based on the attribute information, a hardware logic level corresponding to each level of target loop code in a plurality of levels of target loop code. The plurality of levels of target loop code include a plurality of pieces of single-level loop code to be vectorized in the multidimensional loop code. The plurality of hardware logic levels indicate a multi-level memory access rule of a vector computing unit. Each hardware logic level corresponds to a rule for one level of memory access in the multi-level memory access.

The loop splitting module 1102 is configured to split each level of target loop code based on a length upper limit of the hardware logic level corresponding to the level of target loop code to obtain a plurality of code blocks, and combine the plurality of code blocks into a plurality of pieces of multidimensional subloop code based on a level relationship between hardware logic levels corresponding to the plurality of code blocks.

The instruction replacement module 1103 is configured to update the multidimensional loop code to a vector instruction based on the plurality of pieces of multidimensional subloop code and the attribute information.

The language frontend 1104 may specifically convert source code into intermediate code, which is equivalent to a frontend of the compiler. Processing performed by the parsing and mapping module 1101 and the loop splitting module 1102 on the intermediate code is equivalent to middle-end optimization of the compiler. Processing performed by the instruction replacement module 1103 on output of the loop splitting module 1102 is equivalent to backend optimization of the compiler.

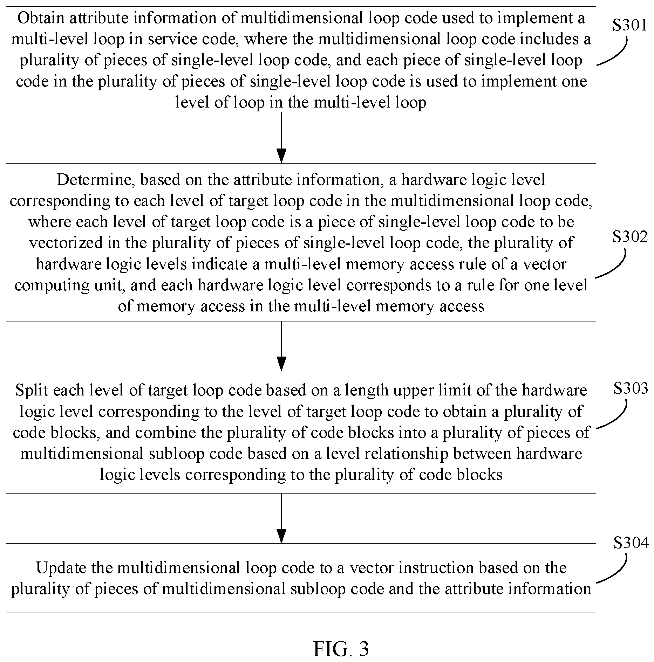

For ease of understanding and proper layout, the following specifically describes the code vectorization method provided in embodiments of this application with reference to FIG. 3 to FIG. 5.

FIG. 3 is a schematic flowchart of a code vectorization method according to an embodiment of this application. An example in which the method is applied to a compiler is used. As shown in FIG. 3, the method may include but is not limited to the following steps.

S301: Obtain attribute information of multidimensional loop code. The multidimensional loop code includes a plurality of pieces of single-level loop code. Each piece of single-level loop code in the plurality of pieces of single-level loop code is used to implement one level of loop in a multi-level loop.

The compiler may read service code from a storage apparatus, convert the service code into intermediate code, and obtain, from the intermediate code through a utility function, an interface, and the like in the compiler, structure information of a multidimensional loop written by a developer in the service code. In an example, the compiler may further obtain memory access information of the multidimensional loop. The attribute information of the multidimensional loop code used to implement the multi-level loop may include at least the structure information of the multidimensional loop, and may further include the memory access information. For example, the structure information may include a parent-child relationship, namely, a level relationship, between levels of loops in the multidimensional loop and a quantity of times each level of loop is executed, namely, a loop count. The memory access information may include a memory access stride of each level of loop. The memory access stride may include a distance or a stride between memory addresses accessed by computing at each level of loop.

For example, the multidimensional loop code in the service code in embodiments of this application may be, for example, code shown in Table 2-1.

| Table 2-1 Example 1 of multidimensional loop code |
|---|
| ```[[ascend::vectorhint(0,1,1)]]    // Preset interface vectorhint()
for(i = 0; i < m; ++i) {        // i loop
    for(j = 0; j < n; ++j) {      // j loop
      for(k = 0; k < p; ++k) {  // k loop
        A[k + j * p + i * n * p] = B[k + j * p + i * n * p] + C[k + j * p + i * n * p]
      }
    }
}``` |

For the multidimensional loop code in Table 2-1, structure information may include a three-level loop. An innermost loop is the k loop. A parent loop of the k loop is the j loop. A parent loop of the j loop is an outermost loop, namely, the i loop. Lengths of the three levels of loops are respectively p, n, and m. Based on the foregoing loop structure, an index of memory access by computing in the loop is as follows: $index = k + j \times p + i \times n \times p$. It may be determined that for the memory access by the computing in the loop, a memory access stride of the innermost loop is 1, a memory access stride of the second-level loop is p, and a memory access stride of the third-level loop is $n \times p$.

S302: Determine, based on the attribute information, a hardware logic level corresponding to each level of target loop code in the multidimensional loop code. Each level of target loop code is a piece of single-level loop code to be vectorized in the plurality of pieces of single-level loop code. The plurality of hardware logic levels indicate a multi-level memory access rule of a vector computing unit. Each hardware logic level corresponds to a rule for one level of memory access in the multi-level memory access.

After obtaining the attribute information of the multidimensional loop code, the compiler may determine, based on the attribute information, the hardware logic level corresponding to each level of target loop code in the multidimensional loop code. It may be understood that a rule for each level of memory access in the multi-level memory access rule includes a memory access stride, a length upper limit, and the like used for the level of memory access. Each hardware logic level corresponds to a rule for one level of memory access in the multi-level memory access. The memory access stride of the hardware logic level is a stride between memory addresses corresponding to an operand and a computing result in each iterative change when the vector computing unit performs vector computing through the hardware logic level. The length upper limit of the hardware logic level is an upper limit of an amount of parallel scalar computing in vector computing when the vector computing unit performs the vector computing through the hardware logic level. In other words, the vector computing unit may perform multi-level vector computing based on the multi-level memory access rule.

For example, the attribute information of the multidimensional loop code may indicate a level relationship between the single-level loop code in the multidimensional loop code, a loop upper bound, and the like. In Table 2-1, single-level loop code may include the k loop, the j loop, and the i loop. One piece of single-level loop code may implement one level of loop, namely, one iterative change, for computing "A[k + j * p + i * n * p] = B[k + j * p + i * n * p] + C[k + j * p + i * n * p]". A loop upper bound of any loop code is a maximum quantity of iterations for the computing. The compiler may determine, based on the attribute information, the hardware logic level corresponding to each level of target loop code in the multidimensional loop code, that is, establish a mapping relationship between the level of target loop code and the hardware logic level. In the mapping relationship, one piece of target loop code may correspond to one or more hardware logic levels, and one hardware logic level corresponds to one piece of target loop code.

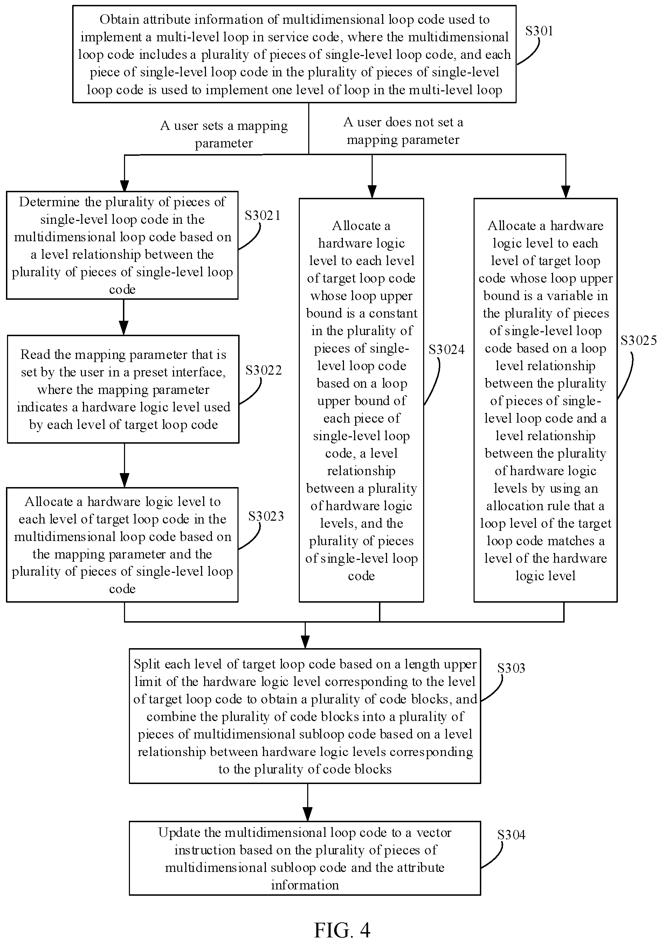

In an optional implementation, FIG. 4 is a schematic flowchart of a code vectorization method according to an embodiment of this application. As shown in FIG. 4, in the code vectorization method provided in embodiments of this application, when a user sets a mapping parameter, S302 shown in FIG. 3 may specifically include the following steps.

S3021: Determine the plurality of pieces of single-level loop code in the multidimensional loop code based on a level relationship between the plurality of pieces of single-level loop code.

S3022: Read a mapping parameter that is set by a user in a preset interface. The mapping parameter indicates a hardware logic level used by each level of target loop code.

S3023: Allocate a hardware logic level to each level of target loop code in the multidimensional loop code based on the mapping parameter and the plurality of pieces of single-level loop code.

For example, as shown in Table 2-1, the compiler may determine the plurality of pieces of single-level loop code in the multidimensional loop code based on the level relationship between the plurality of pieces of single-level loop code: The innermost loop is the k loop, the parent loop of the k loop is the j loop, and the parent loop of the j loop is the outermost loop, namely, the i loop. The preset interface may be vectorhint(). A quantity of parameters in vectorhint indicates a quantity of hardware logic levels. An order in which the parameters are arranged indicates a level relationship between a plurality of hardware logic levels. For example, in vectorhint(0,1,1), there are three parameters, indicating that the vector computing unit supports a three-level loop representation, that is, includes three hardware logic levels. The parameters are arranged from left to right, indicating that a level relationship between the three hardware logic levels is sequentially from inner to outer. In an optional example, that the parameters are arranged from left to right may indicate that the level relationship between the three hardware logic levels is sequentially from outer to inner. Values of the parameters represent different pieces of single-level loop code in the multidimensional loop code. For example, in vectorhint(0,1,1), 0 represents innermost, that is, first-level, single-level loop code. The parameter values increment toward outer levels: 1 represents second-level single-level loop code from inner to outer. 2 represents third-level single-level loop code from inner to outer.

It is assumed that the vector computing unit includes three hardware logic levels. The three hardware logic levels are sequentially a MAXSIMD level, a MAXBANK level, and a MAXREPEAT level from inner to outer. Length upper limits of the three hardware logic levels are sequentially MAXSIMD, MAXBANK, and MAXREPEAT from inner to outer. In this case, in combination with the plurality of pieces of single-level loop code determined by the compiler, in an example in which that the parameters are arranged from left to right indicates that the level relationship between the three hardware logic levels is sequentially from inner to outer, the mapping parameter in the preset interface vectorhint(0,1,1) shown in Table 2-1 indicates that first-level target loop code for implementing the k loop uses the MAXSIMD level of the vector computing unit to perform vector computing; and second-level target loop code for implementing the j loop uses the MAXBANK level and the MAXREPEAT level to perform vector computing. The value "2" does not exist in the mapping parameter, so that the i loop, namely, the third-level loop, is not target loop code, and does not use a hardware logic level and thus does not participate in vectorization. Subsequently, splitting and combination processing do not need to be performed on this loop. Information provided by the interface also indicates that the user wants to vectorize the innermost two loops.

In addition, a level of the target loop code in the multidimensional loop may be different from a level of the hardware logic level used by the target loop code. For example, vectorhint(1,1,0) indicates that the second-level target loop code uses MAXSIMD and MAXBANK, and innermost target loop code uses MAXREPEAT.

It may be understood that a form of the foregoing mapping parameter is merely an example, and any mapping parameter that can indicate the hardware logic level used by each level of target loop code may be used in this application. This is not limited in this embodiment. When the foregoing mapping relationship is obtained by performing S302, the mapping relationship may be stored. For example, the compiler may store the foregoing mapping relationship in a form of a map (a mapping container, which is a data structure).

In embodiments of this application, the user may control the mapping relationship between the target loop code in the multidimensional loop code and the hardware logic level through the preset interface for preferential vectorization of a long loop, to increase an amount of data computed by each vector instruction and improve computing performance. In other words, the user may perceive a loop count in the service code to determine a more accurate mapping relationship, that is, select a loop matching manner with better computing performance. This addresses potential loss of performance optimization caused by inability to perceive the loop count due to a dynamic shape in a compilation process. Even for the dynamic shape, the user may have a value range for a length, to prevent a short loop from being placed at an inner level of the loop or participating in vectorization. Table 2-1 shows a multidimensional loop with a dynamic shape. A length of each dimension is a variable. Automatic vectorization of the loop in the compiler can significantly reduce an execution time of the loop.

For example, the multidimensional loop code in the service code in embodiments of this application may be, for example, code shown in Table 2-2.

| Table 2-2 Example 2 of multidimensional loop code |
| --- |
| for(i = 0; i < m; ++i) {<br><br>   for(j = 0; j < n; ++j) {<br><br>     for(k = 0; k < p; ++k) {<br><br>       A[k + j * p + i * n * p] = B[k + j * p + i * n * p] + C[k + j * p + i * n * p]<br><br>     }<br><br>   }<br><br> } |

The multidimensional loop code shown in Table 2-2 is similar to that shown in Table 2-1. A difference lies in that the user does not set a mapping parameter through a preset interface in Table 2-2.

In an optional implementation, the attribute information includes a loop upper bound of a loop implemented by each level of target loop code. Correspondingly, with continued reference to FIG. 4, when the user does not set a mapping parameter, S302 shown in FIG. 3 may specifically include the following steps.

S3024: Allocate a hardware logic level to each level of target loop code whose loop upper bound is a constant in the plurality of pieces of single-level loop code based on a loop upper bound of each piece of single-level loop code, a level relationship between the plurality of hardware logic levels, and the plurality of pieces of single-level loop code. For example, the compiler may determine the plurality of pieces of single-level loop code in the multidimensional loop code based on the level relationship between the plurality of pieces of single-level loop code: The innermost loop is the k loop, the parent loop of the k loop is the j loop, and the parent loop of the j loop is the outermost loop, namely, the i loop. When the user does not set a mapping parameter through a preset interface, one or more pieces of single-level loop code in the plurality of pieces of single-level loop code may be used as target loop code, depending on limiting factors of a specific application scenario, such as the loop upper bound of each piece of single-level loop code, the level relationship between the plurality of pieces of single-level loop code, and the level relationship between the hardware loop levels. This is not limited in this embodiment. When the loop upper bound of the single-level loop code is a constant, a hardware logic level may be allocated based on that a length upper limit of the hardware logic level is divisible by the constant, namely, the loop upper bound of the single-level loop code. In this way, single-level loop code that is allocated more than 0 hardware logic levels is target loop code. One piece of target loop code may be allocated a plurality of hardware logic levels. One hardware logic level can be allocated to only one piece of target loop code.

In an example, when the loop upper bound of the single-level loop code is a constant, the compiler may allocate a hardware logic level to the target loop code based on a length upper limit of the hardware logic level and the loop upper bound of the target loop code by using a constraint that a tail block of each piece of target loop code is the smallest and a memory access stride corresponding to the target loop code conforms to a memory access stride of the hardware logic level. In this way, single-level loop code that is allocated more than 0 hardware logic levels is target loop code. The tail block is a code block, in the target loop code, whose loop count is a remainder obtained through division by the length upper limit of the allocated hardware logic level. This reduces a part that cannot be vectorized in the target code and avoids an exception caused by a mismatch between the memory access stride of the target loop code and the memory access stride of the allocated hardware logic level, to help further improve computing efficiency. In other words, different hardware structures, namely, structures of the vector computing unit, may have different mapping relationships, which are usually related to iteration counts of loops. In this example, a level of the target loop code may not match a level of the hardware logic level.

S3025: Allocate a hardware logic level to each level of target loop code whose loop upper bound is a variable in the plurality of pieces of single-level loop code based on the loop level relationship between the plurality of pieces of single-level loop code and a level relationship between the plurality of hardware logic levels by using an allocation rule that a loop level of the target loop code matches a level of the hardware logic level.

The compiler may determine the plurality of pieces of single-level loop code in the multidimensional loop code based on the level relationship between the plurality of pieces of single-level loop code: The innermost loop is the k loop, the parent loop of the k loop is the j loop, and the parent loop of the j loop is the outermost loop, namely, the i loop. When the user does not set a mapping parameter through a preset interface, one or more pieces of single-level loop code in the plurality of pieces of single-level loop code may be used as target loop code, depending on limiting factors of a specific application scenario, such as the loop upper bound of each piece of single-level loop code, the level relationship between the plurality of pieces of single-level loop code, and the level relationship between the hardware loop levels. This is not limited in this embodiment. In this step, because the user does not specify a mapping relationship through an interface, a mapping relationship is established at compile time. For a dynamic shape, that is, when the loop upper bound of the single-level loop code is a variable, an iteration count of the loop is an unknown value at compile time. In this case, allocation may be directly performed based on the level of the hardware logic level and the loop level of the target loop code. Three levels of loops in Table 2-2 are used as an example. The three levels of loops may respectively correspond to three levels of loop structures of hardware. The three levels of loops are vectorized. The i loop corresponds to a MAXREPEAT level, the j loop corresponds to a MAXBANK level, and the k loop corresponds to a MAXSIMD level. In this way, a mapping relationship is determined. The mapping relationship may be stored in the compiler in a form of a map.

In an optional example, when a quantity of levels (for example, two-level loop) of the plurality of pieces of single-level loop code is less than a quantity of levels (for example, three-level loop) of the hardware loop levels, on a basis of level matching between them, allocation may be further performed according to a rule that there is no remaining hardware loop level. For example, the multidimensional loop code includes first-level single-level loop code for implementing an r loop and second-level single-level loop code for implementing an s loop. The r loop may correspond to two hardware loop levels, and the s loop may correspond to one hardware loop level. Alternatively, the r loop may correspond to one hardware loop level, and the s loop may correspond to two hardware loop levels. In this way, when the loop upper bound is a variable, single-level loop code that is allocated more than 0 hardware logic levels is target loop code.

In an optional example, when a quantity of levels (for example, three-level loop) of the plurality of pieces of single-level loop code is greater than a quantity of levels (for example, two-level loop) of the hardware loop levels, on a basis of level matching between them, allocation may be further performed according to a rule that pieces of single-level loop code in a quantity equal to a difference between their quantities of levels are not vectorized. For example, the multidimensional loop code includes first-level single-level loop code for implementing an r loop, second-level single-level loop code for implementing an s loop, and third-level single-level loop code for implementing a q loop. Two pieces of single-level loop code may be allocated hardware loop levels at corresponding levels, and the other piece of single-level loop code is not vectorized. A specific selection of the target loop code depends on an application requirement. For example, pieces of single-level loop code from inner to outer in a quantity equal to the quantity of levels of the hardware loop levels may be determined as the target loop code. This is not limited in this embodiment. In this way, when the loop upper bound is a variable, single-level loop code that is allocated more than 0 hardware logic levels is target loop code.

Embodiments of this application are applicable to a scenario in which the user does not set a mapping relationship between the target loop code and the hardware logic level. This can further expand an applicable scope, reduce vectorization failure, and improve computing efficiency.

S303: Split each level of target loop code based on a length upper limit of the hardware logic level corresponding to the level of target loop code to obtain a plurality of code blocks, and combine the plurality of code blocks into a plurality of pieces of multidimensional subloop code based on a level relationship between hardware logic levels corresponding to the plurality of code blocks.

After determining the hardware logic level corresponding to each level of target loop code in a plurality of levels of target loop code, the compiler may split each level of target loop code based on the length upper limit of the hardware logic level corresponding to the level of target loop code to obtain the plurality of code blocks. Each code block may be used to perform at least one iteration for computing in the multidimensional loop. A specific iteration count depends on a multiple of a length upper limit of the hardware logic level corresponding to the code block.

In an optional implementation, splitting each level of target loop code based on the length upper limit of the hardware logic level corresponding to the level of target loop code to obtain the plurality of code blocks may specifically include:

splitting, based on the length upper limit of the hardware logic level corresponding to each level of target loop code, the level of target loop code into a non-tail block whose loop count is an integer multiple of the length upper limit of the corresponding hardware logic level and a tail block whose loop count is less than the length upper limit of the corresponding hardware logic level.

For example, a single level of loop code, namely, the target loop code, is split into (q + 1) blocks based on a mapping relationship. q is a quantity of hardware logic levels to which the level of loop code is mapped.

For the mapping relationship in the example in Table 2-1, the two-level loop may be expressed as follows:

j loop:

$$n = x \times (MAXBANK \times MAXREPEAT) + y \times (MAXBANK) + z = part1 + part2 + part3;$$

and
k loop:

$$p = (MAXSIMD) \times a + b = part4 + part5.$$

The two expressions are a basis for loop splitting: The j loop is split into three parts (part1 to part3) because it is mapped to two hardware loop levels. The k loop is split into two parts (part4 and part5) because it is mapped to one hardware loop level. For j-loop subloop code that uses two hardware loop levels, namely, the MAXBANK level and the MAXREPEAT level, meanings of parameters in the foregoing expression are as follows:

MAXBANK × MAXREPEAT is a reference splitting length used to obtain a first-level non-tail block and a first-level tail block, and represents a quantity of parallel scalar computing operations in one vector computing of the two hardware logic levels (the MAXBANK level and the MAXREPEAT level). A splitting length of the first-level non-tail block is x times the reference splitting length. A loop count of the first-level tail block is less than the reference splitting length, that is, a splitting length of the first-level tail block is a remainder obtained by dividing a loop count of the target loop code by the reference length.

MAXBANK is a reference splitting length used to obtain a second-level non-tail block and a second-level tail block. The second-level non-tail block and the second-level tail block are code blocks obtained by splitting the first-level tail block, that is, through second-level splitting. MAXBANK is used as the reference splitting length of the second-level splitting because the MAXBANK level is an inner level of the MAXREPEAT level. A splitting length of the second-level non-tail block is y times the reference splitting length of the second-level splitting. A loop count of the second-level tail block is less than the reference splitting length of the second-level splitting, that is, a splitting length of the second-level tail block is a remainder obtained by dividing the loop count of the first-level tail block by the reference length of the second-level splitting. The loop count of the second-level tail block is z, representing a quantity of parallel scalar computing operations in the second-level tail block.

Similarly, for k-loop subloop code that uses one hardware loop level, namely, the MAXSIMD level, only one level of splitting is performed to obtain a non-tail block and a tail block. A reference splitting length is MAXSIMD. A splitting length of the non-tail block is a times the reference splitting length. A loop count of the tail block is b, representing a remainder obtained by dividing a loop count of the k loop by MAXSIMD, namely, a quantity of parallel scalar computing operations in the tail block.

For the mapping relationship in the example in Table 2-2, the three-level loop may be expressed as follows:

$$m = x \times \text{MAXREPEAT} + y = \text{part1} + \text{part2};$$

$$n = z \times \text{MAXBANK} + w = \text{part3} + \text{part4}; \text{ and}$$

$$p = a \times \text{MAXSIMD} + b = \text{part5} + \text{part6}.$$

The three expressions are a basis for loop splitting: The i loop, the j loop, and the k loop each are divided into two parts because they each are mapped to only one hardware loop level. Meanings of parameters in each part are similar to the foregoing description of the splitting based on the mapping relationship in the example in Table 2-1. A difference lies in that specific subloop code and hardware logic level are different. For a same part, details are not described herein again. For details, refer to the foregoing description of the splitting based on the mapping relationship in the example in Table 2-1.

In embodiments of this application, the multidimensional loop code is split based on the length upper limit of the hardware logic level. This ensures that a multidimensional subloop subsequently obtained through combination based on a splitting result can be processed by the vector computing unit, to prevent vectorization failure.

In an optional implementation, combining the plurality of code blocks into the plurality of pieces of multidimensional subloop code based on the level relationship between the hardware logic levels corresponding to the plurality of code blocks may specifically include:

combining one of the plurality of code blocks corresponding to each level of target loop code into a piece of multidimensional subloop code based on a combination rule that a loop level in a multidimensional subloop implemented by each piece of multidimensional subloop code in the multidimensional subloop code matches a level relationship between hardware logic levels corresponding to the piece of multidimensional subloop code, until the plurality of code blocks corresponding to each level of target loop code are combined, to obtain the multidimensional subloop code.

In other words, the compiler selects one code block from the plurality of code blocks corresponding to each target loop level, and may obtain one piece of multidimensional subloop code through combination based on that a combination result adapts to a level relationship between hardware logic levels corresponding to the combination result, until all code blocks in the plurality of code blocks corresponding to each target loop level are combined, to obtain the plurality of pieces of multidimensional subloop code. For example, when the user sets a mapping parameter through a preset interface, that is, for a splitting result in Table 2-1:

It is assumed that first target loop code is outermost target loop code, and a plurality of corresponding code blocks include part1, part2, and part3. In this case, code blocks corresponding to each level of target loop code except the first target loop code, namely, second-level target loop code, include part4 and part5.

A loop level in the multidimensional subloop code obtained through the combination depends on a level of each corresponding hardware logic level. This means that there is only one level relationship between the code blocks in the combination result, and there is no change in the combination result due to various level relationships. Based on this, a quantity of pieces of multidimensional subloop code is a product of quantities of code blocks corresponding to all levels of target loop code, for example, $3 \times 2 = 6$ or $2 \times 3 = 6$, which may specifically include a combination of part1 and part4, a combination of part1 and part5, a combination of part2 and part4, a combination of part2 and part5, a combination of part3 and part4, and a combination of part3 and part5.

In other words, the blocks of the two levels of loops k and j are combined in pairs to form six nested subloops. The nested subloops are adjusted to adapt to a hardware form. x, y, and a represent quantities of times computing is performed by hardware logic levels corresponding to their respective length upper limits. Therefore, subloops with lengths x, y, and a are placed at an outermost level. For example, for the combination of part1 and part5, formed multidimensional subloop code is shown in Table 3-1.

| Table 3-1 Example 1 of multidimensional subloop code |
|---|
| // Subloop corresponding to x<br><br>for(j3 = 0; j3 + MAXREPEAT * MAXBANK <= n; j3 += MAXREPEAT * MAXBANK) {<br><br>// Subloop corresponding to MAXREPEAT<br><br>for(int j2 = j3; j2 < j3 + MAXREPEAT * MAXBANK; j2 += MAXBANK) {<br><br>// Subloop corresponding to MAXBANK<br><br>    for(int j1 = j2; j1 < j2 + MAXBANK; ++j1) {<br><br>// Subloop corresponding to b<br><br>       for(int k = MAXSIMD * a; k < p; ++k) {}<br><br>    }<br><br>  }<br><br>} |

In the code shown in embodiments of this application, "*" represents multiplication. Similarly, in comparison with the example in Table 3-1, for the combination of part1 and part4, there is an additional subloop corresponding to a. a represents that the MAXSIMD hardware logic level executes the allocated subloop a times. The subloop corresponding to a is placed at an outer level, as shown in Table 3-2.

| Table 3-2 Example 2 of multidimensional subloop code |
|---|
| // Subloop corresponding to x<br><br>for(j3 = 0; j3 + MAXREPEAT * MAXBANK <= n; j3 += MAXREPEAT * MAXBANK) {<br><br>// Subloop corresponding to a<br><br>for(int k2 = 0; k2 + MAXSIMD <= p; k2 += MAXSIMD) {<br><br>// Subloop corresponding to MAXREPEAT<br><br>    for(int j2 = j3; j2 < j3 + MAXREPEAT * MAXBANK; j2 += MAXBANK) {<br><br>// Subloop corresponding to MAXBANK |

```
            for(int j1 = j2; j1 < j2 + MAXBANK; ++j1) {
    // Subloop corresponding to MAXSIMD
                for(int k1 = k2; k1 < k2 + MAXSIMD; ++k1) {}
            }
        }
      }
  }
```

It may be understood that a level relationship between the subloop corresponding to a and the subloop corresponding to x may be arbitrary, for example, may be that the subloop corresponding to a is at an inner level of the subloop corresponding to x in Table 3-2, or may be that the subloop corresponding to a is at an outer level of the subloop corresponding to x.

Similarly, in comparison with the example in Table 3-1, for the combination of part2 and part5, there is no subloop corresponding to MAXREPEAT, as shown in Table 3-3.

| Table 3-3 Example 3 of multidimensional subloop code |
|---|
| ```
// Subloop corresponding to y
for (j2 = x * MAXREPEAT * MAXBANK; j2 + MAXBANK <= n; j2 += MAXBANK){
    // Subloop corresponding to MAXBANK
    for(int j1 = j2; j1 < j2 + MAXBANK; ++j1) {
        // Subloop corresponding to b
        for(int k = MAXSIMD * a; k < p; ++k) {}
    }
}
``` |

For example, when the user does not set a mapping parameter through a preset interface, that is, for a splitting result in Table 2-2:

A plurality of code blocks corresponding to outermost target loop code may include part1 and part2. Second-level target loop code corresponds to the code blocks part3 and part4. Third-level target loop code corresponds to the code blocks part5 and part6. Based on this, a quantity of pieces of multidimensional subloop code is a product of quantities of code blocks corresponding to all levels of target loop code, for example, 2 × 2 × 2 = 8, which may specifically include a combination of part1, part3, and part5, a combination of part1, part4, and part5, a combination of part1, part3, and part6, a combination of part1, part4, and part6, a combination of part2, part3, and part5, a combination of part2, part4, and part5, a combination of part2, part3, and part6, and a combination of part2, part4, and part6.

In other words, splitting results of the three-level loop in Table 2-2 are combined to form eight nested subloops. The nested subloops are adjusted to adapt to a hardware form. Loops with lengths x, z, and a are placed at an outermost level. For example, for the combination of part1, part4, and part5, multidimensional subloop code obtained through combination is shown in Table 3-4.

| Table 3-4 Example 4 of multidimensional subloop code |
|---|
| ```
for(i1 = 0; i1 + MAXREPEAT <= m; i1 += MAXREPEAT) {     // Subloop corresponding to x
    for(k1 = 0; k1 + MAXSIMD <= p; k1 += MAXSIMD) {     // Subloop corresponding to a
``` |

```
for(int i0 = i1; i0 < i1 + MAXREPEAT; ++i0) {        // Subloop corresponding to MAXREPEAT
    for(int j = z * MAXBANK; j < n; ++j) {        // Subloop corresponding to w
        for(int k0 = k1; k0 < k1 + MAXSIMD; ++k0) {}  // Subloop corresponding to MAXSIMD
    }
  }
 }
}
```

In embodiments of this application, one code block is selected from each target loop level and combined into one piece of multidimensional subloop code based on the level relationship between the hardware logic levels corresponding to the code blocks, until all code blocks are combined, to obtain the plurality of pieces of multidimensional subloop code. This can avoid that the combination does not conform to an original loop structure and excessive combination results, to ensure loop correctness of multidimensional subloops obtained through combination and theoretically minimize a quantity of subloops and a quantity of vector instructions, thereby further improving computing efficiency.

S304: Update the multidimensional loop code to a vector instruction based on the plurality of pieces of multidimensional subloop code and the attribute information. The vector instruction is used by the vector computing unit to perform vector computing.

After obtaining the plurality of pieces of multidimensional subloop code, the compiler may update the multidimensional loop code to the vector instruction based on the plurality of pieces of multidimensional subloop code and the attribute information. The vector instruction is used by the vector computing unit to perform vector computing. In this way, the compiler vectorizes the multidimensional loop code when obtaining a vector instruction of the multidimensional loop code.

In an optional implementation, the attribute information includes a memory access stride of each level of target loop code.

Correspondingly, updating the multidimensional loop code to the vector instruction based on the plurality of pieces of multidimensional subloop code and the attribute information may specifically include:
generating a vector instruction of each piece of multidimensional subloop code in the plurality of pieces of multidimensional subloop code by performing the following operations:

generating a mask of an innermost level of subloop code in the multidimensional subloop code based on a length upper limit of a hardware logic level corresponding to the innermost level of subloop code and a loop count of a loop implemented by the innermost level of subloop code;
starting from an outer level of subloop code of the innermost level of subloop code in the multidimensional subloop code, generating a mask of a current level of subloop code based on a length upper limit of a hardware logic level corresponding to an inner level of subloop code, a length upper limit of a hardware logic level corresponding to the current level of subloop code, a mask of the inner level of subloop code, and a loop count of the current level of subloop code, until a mask of each piece of subloop code in the multidimensional subloop code is generated, to obtain a mask of the multidimensional subloop code, where the mask of the multidimensional subloop code indicates attribute information of subloop code, in the multidimensional subloop code, whose loop count is less than a length upper limit of a hardware logic level corresponding to the multidimensional subloop code;
generating the vector instruction of the multidimensional subloop code based on the stride corresponding to the multidimensional subloop code and the mask of the multidimensional subloop code; and
replacing the multidimensional loop code with the vector instruction of each piece of multidimensional subloop code in the plurality of pieces of multidimensional subloop code.

For example, the attribute information of the subloop code, in the multidimensional subloop code, whose loop count is less than the length upper limit of the hardware logic level corresponding to the multidimensional subloop code, namely, attribute information of a tail block in the multidimensional subloop code, may include a quantity, lengths, and positions of tail blocks in the multidimensional subloop code. The position is a memory address accessed by computing in a loop implemented by the tail block. It may be understood that in the same multidimensional subloop code, there may be an interval between memory access positions corresponding to tail blocks in different subloop code, that is, memory access may be non-contiguous.

In this embodiment, a mask is determined for each piece of subloop code in each piece of multidimensional subloop code. A manner of determining a mask of a piece of subloop code may include: determining masks of all levels of subloop code one by one from inner to outer. A length upper limit of a hardware logic level corresponding to the innermost level of subloop code is used as a quantity of bits of the mask. Starting from a least significant bit of the mask, mask bits in a quantity equal to an iteration count of the innermost level of subloop code are set to 1, namely, valid bits, as the mask of the current level. When a mask of an outer level is being determined, a position whose index is an integer multiple of the length upper limit of the hardware logic level corresponding to the inner level of subloop code is a start bit position of the current level. Valid bits of the inner-level mask are placed n times. n is the iteration count of the current level. This process continues recursively until the masks of all levels of subloop code in the multidimensional subloop code are determined. In other words, if the length upper limit of the hardware corresponding to the innermost level of subloop code is MAXSIMD and the iteration count of the subloop code is b, a total length of the mask (mask) of the innermost level of subloop code, which may also be referred to as mask1, is MAXSIMD. b bits of mask1 starting from a start bit are 1, and the rest are 0. The length upper limit of the hardware logic level corresponding to an outer level adjacent to the innermost level, namely, an inner level of subloop code of the innermost level, is MAXBANK. Therefore, a total length of the mask (mask) of the current level, which may also be referred to as mask2, is MAXBANK $\times$ MAXSIMD. The loop iteration count of the current level is MAXBANK. Therefore, mask1 is placed from bit positions $0 \times$ MAXSIMD, $1 \times$ MAXSIMD, ..., and (loop iteration count of the current level - 1) $\times$ MAXSIMD, that is, mask1s in a quantity equal to the loop iteration count of the current level are placed.

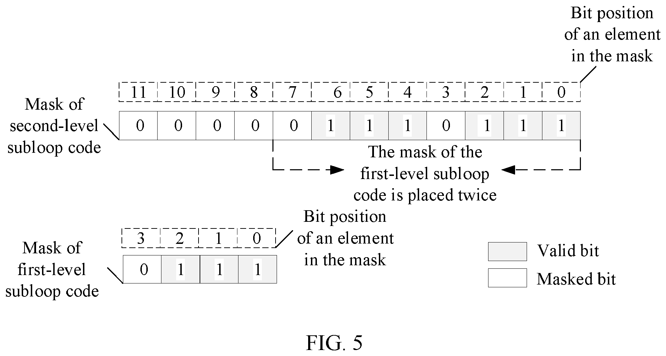

For example, FIG. 5 is an example diagram of a mask structure of multidimensional subloop code in a code vectorization method according to an embodiment of this application. As shown in FIG. 5, an innermost level is first-level subloop code, a length upper limit of a corresponding hardware logic level is MAXSIMD = 4, and an iteration count of the first-level subloop code is b = 3. In this case, a mask of the first-level subloop code is mask1 = 0111. An outer level of the first-level subloop code is second-level subloop code, a length upper limit of a corresponding hardware logic level is MAXBANK = 3, and an iteration count of the second-level subloop code is 2. In this case, only 6 bits in MAXBANK $\times$ MAXSIMD = 12 bits of a mask of the second-level subloop code are set to 1, that is, "0111" is placed twice from the $0^{th}$ bit, to finally obtain mask2 = 000001110111.

In embodiments of this application, the mask (mask) is a form of a register. One bit in the mask corresponds to one bit in the register. A part that is not vectorized may be masked by setting the mask, to avoid a computing exception caused by incorrect modification to a memory. This can ensure correctness of a tail block during vectorization of a multidimensional loop with a dynamic shape. In addition, in a scenario of multidimensional loop code, the mask can be quickly generated in a manner of extending from inner to outer and filling in valid bits, to further improve computing efficiency.

In an example, a hardware unit supporting a multidimensional vector, namely, a vector computing unit, needs to fill in information such as an input/output memory start position, namely, a memory access start bit, and a memory access stride of computing in a multi-level loop. The attribute information of the multidimensional loop code includes the information. After the splitting, the attribute information of the multidimensional loop code may be divided based on a loop count after the splitting, to obtain a memory access start bit of the multidimensional subloop and the memory access stride of the computing in the multi-level loop. In this way, the compiler can generate the vector instruction of the multidimensional subloop code based on the stride of each level of target loop code corresponding to the multidimensional subloop code and the mask of the multidimensional subloop code, and then replace the multidimensional loop code with the vector instruction of each piece of multidimensional subloop code in the plurality of pieces of multidimensional subloop code. In other words, in embodiments of this application, the compiler replaces the entire multidimensional loop in the service code with the vector instructions of the multidimensional subloop code corresponding to the multidimensional loop, which is equivalent to replacing the multidimensional loop in the service code with a vector instruction, so that the compiler sends the vector instruction to the vector computing unit. The vector computing unit executes the received vector instruction, to implement vector computing during the computing in the multidimensional loop in the service code: parallel computing of a plurality of pieces of data.

In embodiments of this application, each level of loop code in the multidimensional loop code is split into the plurality of code blocks based on the length upper limit of the hardware logic level in the vector computing unit. The plurality of code blocks are combined into a plurality of multidimensional subloops based on the level relationship between the hardware logic levels in the vector computing unit, to ensure that a dimension and length of each piece of multidimensional subloop code satisfy processing conditions of the hardware logic levels. On this basis, the multidimensional loop code may be updated to the vector instruction. In this way, vectorization of a multidimensional loop is not limited by a length of any level of loop and whether a shape is static or dynamic, to prevent vectorization failure and improve computing efficiency.

In addition, to implement functions of the code vectorization method in the foregoing embodiments of this application, the platform shown in FIG. 1 and the compiler shown in FIG. 2 in this application include corresponding hardware and/or software modules for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments. However, it should not be considered that the implementation goes beyond the scope of this application.

An embodiment further provides a computer storage medium. The computer storage medium stores computer instructions. When the computer instructions are run on an electronic device, the electronic device is enabled to perform the foregoing related method steps to implement the code vectorization method in the foregoing embodiments. An embodiment further provides a computer program product. When the computer program product is run on a computer, the computer is enabled to perform the foregoing related steps to implement the code vectorization method in the foregoing embodiment.

The electronic device, the computer storage medium, the computer program product, or the chip provided in embodiments is configured to perform the corresponding method provided above. Therefore, for beneficial effects that can be achieved, refer to beneficial effects of the corresponding method provided above. Details are not described herein again.

Any content in embodiments of this application and any content in a same embodiment can be freely combined. Any combination of the foregoing content falls within the scope of this application.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium. The communication medium includes any medium that enables a computer program to be transmitted from one place to another. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make modifications without departing from the purposes of this application and the protection scope of the claims, and all the modifications shall fall within the protection of this application.

**Claims**

1. A code vectorization method, wherein the method comprises:

    obtaining attribute information of multidimensional loop code, wherein the multidimensional loop code comprises a plurality of pieces of single-level loop code, and each piece of single-level loop code in the plurality of pieces of single-level loop code is used to implement one level of loop in a multi-level loop;
    determining, based on the attribute information, a hardware logic level corresponding to each level of target loop code in the multidimensional loop code, wherein each level of target loop code is a piece of single-level loop code to be vectorized in the plurality of pieces of single-level loop code, the plurality of hardware logic levels indicate a multi-level memory access rule of a vector computing unit, and each hardware logic level corresponds to a rule for one level of memory access in the multi-level memory access;
    splitting each level of target loop code based on a length upper limit of the hardware logic level corresponding to the level of target loop code to obtain a plurality of code blocks, and combining the plurality of code blocks into a plurality of pieces of multidimensional subloop code based on a level relationship between hardware logic levels corresponding to the plurality of code blocks; and
    updating the multidimensional loop code to a vector instruction based on the plurality of pieces of multidimensional subloop code and the attribute information, wherein the vector instruction is used by the vector computing unit to perform vector computing.

2. The method according to claim 1, wherein the attribute information comprises a level relationship between the plurality of pieces of single-level loop code; and
determining, based on the attribute information, the hardware logic level corresponding to each level of target loop code in the multidimensional loop code comprises:

    determining the plurality of pieces of single-level loop code in the multidimensional loop code based on the level relationship between the plurality of pieces of single-level loop code;
    reading a mapping parameter that is set by a user in a preset interface, wherein the mapping parameter indicates a hardware logic level used by each level of target loop code; and
    allocating a hardware logic level to each level of target loop code in the multidimensional loop code based on the mapping parameter and the plurality of pieces of single-level loop code.

3. The method according to claim 1, wherein the attribute information comprises a loop upper bound of each piece of single-level loop code and a level relationship between the plurality of pieces of single-level loop code; and determining, based on the attribute information, the hardware logic level corresponding to each level of target loop code in the multidimensional loop code comprises:

   determining the plurality of pieces of single-level loop code in the multidimensional loop code based on the level relationship between the plurality of pieces of single-level loop code;
   allocating a hardware logic level to each level of target loop code whose loop upper bound is a constant in the plurality of pieces of single-level loop code based on the loop upper bound of each piece of single-level loop code, a length upper limit of each hardware logic level, and the plurality of pieces of single-level loop code; and
   allocating a hardware logic level to each level of target loop code whose loop upper bound is a variable in the plurality of pieces of single-level loop code based on the loop level relationship between the plurality of pieces of single-level loop code and a level relationship between the plurality of hardware logic levels by using an allocation rule that a loop level of the target loop code matches a level of the hardware logic level.

4. The method according to any one of claims 1 to 3, wherein combining the plurality of code blocks into the plurality of pieces of multidimensional subloop code based on the level relationship between the hardware logic levels corresponding to the plurality of code blocks comprises:
   combining one of the plurality of code blocks corresponding to each level of target loop code into a piece of multidimensional subloop code based on a combination rule that a loop level in a multidimensional subloop implemented by each piece of multidimensional subloop code in the multidimensional subloop code matches a level relationship between hardware logic levels corresponding to the piece of multidimensional subloop code, until the plurality of code blocks corresponding to each level of target loop code are combined, to obtain the multidimensional subloop code.

5. The method according to any one of claims 1 to 4, wherein the attribute information comprises a memory access stride of each piece of single-level loop code; and
   updating the multidimensional loop code to the vector instruction based on the plurality of pieces of multidimensional subloop code and the attribute information comprises:
   generating a vector instruction of each piece of multidimensional subloop code in the plurality of pieces of multidimensional subloop code by performing the following operations:

   generating a mask of an innermost level of subloop code in the multidimensional subloop code based on a length upper limit of a hardware logic level corresponding to the innermost level of subloop code and a loop count of a loop implemented by the innermost level of subloop code;
   starting from an outer level of subloop code of the innermost level of subloop code in the multidimensional subloop code, generating a mask of a current level of subloop code based on a length upper limit of a hardware logic level corresponding to an inner level of subloop code, a length upper limit of a hardware logic level corresponding to the current level of subloop code, a mask of the inner level of subloop code, and a loop count of the current level of subloop code, until a mask of each piece of subloop code in the multidimensional subloop code is generated, to obtain a mask of the multidimensional subloop code, wherein the mask of the multidimensional subloop code indicates attribute information of subloop code, in the multidimensional subloop code, whose loop count is less than a length upper limit of a hardware logic level corresponding to the multidimensional subloop code;
   generating the vector instruction of the multidimensional subloop code based on the stride of each level of target loop code corresponding to the multidimensional subloop code and the mask of the multidimensional subloop code; and
   replacing the multidimensional loop code with the vector instruction of each piece of multidimensional subloop code in the plurality of pieces of multidimensional subloop code.

6. The method according to any one of claims 1 to 5, wherein splitting each level of target loop code based on the length upper limit of the hardware logic level corresponding to the level of target loop code to obtain the plurality of code blocks comprises:
   splitting, based on the length upper limit of the hardware logic level corresponding to each level of target loop code, the level of target loop code into a non-tail block whose loop count is an integer multiple of the length upper limit of the corresponding hardware logic level and a tail block whose loop count is less than the length upper limit of the corresponding hardware logic level.

7. A code vectorization apparatus, wherein the apparatus comprises:

a parsing and mapping module, configured to obtain attribute information of multidimensional loop code, wherein the multidimensional loop code comprises a plurality of pieces of single-level loop code, and each piece of single-level loop code in the plurality of pieces of single-level loop code is used to implement one level of loop in a multi-level loop; and determine, based on the attribute information, a hardware logic level corresponding to each level of target loop code in the multidimensional loop code, wherein each level of target loop code is a piece of single-level loop code to be vectorized in the plurality of pieces of single-level loop code, the plurality of hardware logic levels indicate a multi-level memory access rule of a vector computing unit, and each hardware logic level corresponds to a rule for one level of memory access in the multi-level memory access;

a loop splitting module, configured to split each level of target loop code based on a length upper limit of the hardware logic level corresponding to the level of target loop code to obtain a plurality of code blocks, and combine the plurality of code blocks into a plurality of pieces of multidimensional subloop code based on a level relationship between hardware logic levels corresponding to the plurality of code blocks; and

an instruction replacement module, configured to update the multidimensional loop code to a vector instruction based on the plurality of pieces of multidimensional subloop code and the attribute information, wherein the vector instruction is used by the vector computing unit to perform vector computing.

8. The apparatus according to claim 7, wherein the attribute information comprises a level relationship between the plurality of pieces of single-level loop code; and
the parsing and mapping module is specifically configured to:

determine the plurality of pieces of single-level loop code in the multidimensional loop code based on the level relationship between the plurality of pieces of single-level loop code;
read a mapping parameter that is set by a user in a preset interface, wherein the mapping parameter indicates a hardware logic level used by each level of target loop code; and
allocate a hardware logic level to each level of target loop code in the multidimensional loop code based on the mapping parameter and the plurality of pieces of single-level loop code.

9. The apparatus according to claim 7, wherein the attribute information comprises a loop upper bound of each piece of single-level loop code and a level relationship between the plurality of pieces of single-level loop code; and
the parsing and mapping module is specifically configured to:

determine the plurality of pieces of single-level loop code in the multidimensional loop code based on the level relationship between the plurality of pieces of single-level loop code;
allocate a hardware logic level to each level of target loop code whose loop upper bound is a constant in the plurality of pieces of single-level loop code based on the loop upper bound of each piece of single-level loop code, a length upper limit of each hardware logic level, and the plurality of pieces of single-level loop code; and
allocate a hardware logic level to each level of target loop code whose loop upper bound is a variable in the plurality of pieces of single-level loop code based on the loop level relationship between the plurality of pieces of single-level loop code and a level relationship between the plurality of hardware logic levels by using an allocation rule that a loop level of the target loop code matches a level of the hardware logic level.

10. The apparatus according to any one of claims 7 to 9, wherein the loop splitting module is specifically configured to: combine one of the plurality of code blocks corresponding to each level of target loop code into a piece of multidimensional subloop code based on a combination rule that a loop level in a multidimensional subloop implemented by each piece of multidimensional subloop code in the multidimensional subloop code matches a level relationship between hardware logic levels corresponding to the piece of multidimensional subloop code, until the plurality of code blocks corresponding to each level of target loop code are combined, to obtain the multidimensional subloop code.

11. The apparatus according to any one of claims 7 to 10, wherein the attribute information comprises a memory access stride of each piece of single-level loop code; and
the instruction replacement module is specifically configured to:
generate a vector instruction of each piece of multidimensional subloop code in the plurality of pieces of multidimensional subloop code by performing the following operations:

generate a mask of an innermost level of subloop code in the multidimensional subloop code based on a length upper limit of a hardware logic level corresponding to the innermost level of subloop code and a loop count of a loop implemented by the innermost level of subloop code;

starting from an outer level of subloop code of the innermost level of subloop code in the multidimensional subloop code, generate a mask of a current level of subloop code based on a length upper limit of a hardware logic level corresponding to an inner level of subloop code, a length upper limit of a hardware logic level corresponding to the current level of subloop code, a mask of the inner level of subloop code, and a loop count of the current level of subloop code, until a mask of each piece of subloop code in the multidimensional subloop code is generated, to obtain a mask of the multidimensional subloop code, wherein the mask of the multidimensional subloop code indicates attribute information of subloop code, in the multidimensional subloop code, whose loop count is less than a length upper limit of a hardware logic level corresponding to the multidimensional subloop code;

generate the vector instruction of the multidimensional subloop code based on the stride of each level of target loop code corresponding to the multidimensional subloop code and the mask of the multidimensional subloop code; and

replace the multidimensional loop code with the vector instruction of each piece of multidimensional subloop code in the plurality of pieces of multidimensional subloop code.

12. The apparatus according to any one of claims 7 to 11, wherein the loop splitting module is specifically configured to: split, based on the length upper limit of the hardware logic level corresponding to each level of target loop code, the level of target loop code into a non-tail block whose loop count is an integer multiple of the length upper limit of the corresponding hardware logic level and a tail block whose loop count is less than the length upper limit of the corresponding hardware logic level.

13. An electronic device, comprising:

a processor and a memory, wherein the processor and the memory are connected to each other;
the memory is configured to store one or more programs; and
when the one or more programs are executed by the one or more processors, the one or more processors are enabled to implement the method according to any one of claims 1 to 6.

14. A computer-readable storage medium, comprising a computer program, wherein when the computer program is run on an electronic device, the electronic device is enabled to perform the method according to any one of claims 1 to 6.

15. A chip, comprising one or more interface circuits and one or more processors, wherein the interface circuit is configured to: receive a signal from a memory of an electronic device, and send the signal to the processor, and the signal comprises computer instructions stored in the memory; and when the processor executes the computer instructions, the electronic device is enabled to perform the method according to any one of claims 1 to 6.

16. A computer program product, comprising a computer program, wherein when the computer program is executed by an electronic device, the electronic device is enabled to perform the method according to any one of claims 1 to 6.

```
                    ┌─────────────────────┐
                    │                     │
                    │     Source code     │
                    │                     │
                    └──────────┬──────────┘
                               │
         ┌─────────────────────┴─────────────────────┐
         │             Compiler 101                  │
         │   ┌───────────────────────────────────┐   │
         │   │     Vectorization module          │   │
         │   │        group 1011                 │   │
         │   │   ┌───────────────────────────┐   │   │
         │   │   │   Parsing and mapping      │   │   │
         │   │   │     module 1101            │   │   │
         │   │   └─────────────┬─────────────┘   │   │
         │   │                 │                 │   │
         │   │   ┌─────────────┴─────────────┐   │   │
         │   │   │   Loop splitting module   │   │   │
         │   │   │         1102              │   │   │
         │   │   └─────────────┬─────────────┘   │   │
         │   │                 │                 │   │
         │   │   ┌─────────────┴─────────────┐   │   │
         │   │   │  Instruction replacement  │   │   │
         │   │   │     module 1103           │   │   │
         │   │   └───────────────────────────┘   │   │
         │   └───────────────────────────────────┘   │
         └─────────────────────┬─────────────────────┘
                               │
         ┌─────────────────────┴─────────────────────┐
         │  Hardware 102                             │
         │       ┌───────────────────────────┐       │
         │       │  Vector computing unit     │       │
         │       │         1021              │       │
         │       └───────────────────────────┘       │
         └───────────────────────────────────────────┘
```

FIG. 1

Compiler 101

Language frontend 1104

Middle-end
optimization

Parsing and mapping
module 1101

Loop splitting module 1102

Backend
optimization

Instruction replacement
module 1103

FIG. 2

Obtain attribute information of multidimensional loop code used to implement a
multi-level loop in service code, where the multidimensional loop code includes a
plurality of pieces of single-level loop code, and each piece of single-level loop
code in the plurality of pieces of single-level loop code is used to implement one
level of loop in the multi-level loop

S301

Determine, based on the attribute information, a hardware logic level
corresponding to each level of target loop code in the multidimensional loop code,
where each level of target loop code is a piece of single-level loop code to be
vectorized in the plurality of pieces of single-level loop code, the plurality of
hardware logic levels indicate a multi-level memory access rule of a vector
computing unit, and each hardware logic level corresponds to a rule for one level
of memory access in the multi-level memory access

S302

Split each level of target loop code based on a length upper limit of the hardware
logic level corresponding to the level of target loop code to obtain a plurality of
code blocks, and combine the plurality of code blocks into a plurality of pieces of
multidimensional subloop code based on a level relationship between hardware
logic levels corresponding to the plurality of code blocks

S303

Update the multidimensional loop code to a vector instruction based on the
plurality of pieces of multidimensional subloop code and the attribute information

S304

FIG. 3

Obtain attribute information of multidimensional loop code used to implement a multi-level loop in service code, where the multidimensional loop code includes a plurality of pieces of single-level loop code, and each piece of single-level loop code in the plurality of pieces of single-level loop code is used to implement one level of loop in the multi-level loop    S301

A user sets a mapping parameter

A user does not set a mapping parameter

Determine the plurality of pieces of single-level loop code in the multidimensional loop code based on a level relationship between the plurality of pieces of single-level loop code    S3021

Read the mapping parameter that is set by the user in a preset interface, where the mapping parameter indicates a hardware logic level used by each level of target loop code    S3022

Allocate a hardware logic level to each level of target loop code in the multidimensional loop code based on the mapping parameter and the plurality of pieces of single-level loop code    S3023

Allocate a hardware logic level to each level of target loop code whose loop upper bound is a constant in the plurality of pieces of single-level loop code based on a loop upper bound of each piece of single-level loop code, a level relationship between a plurality of hardware logic levels, and the plurality of pieces of single-level loop code    S3024

Allocate a hardware logic level to each level of target loop code whose loop upper bound is a variable in the plurality of pieces of single-level loop code based on a loop level relationship between the plurality of pieces of single-level loop code and a level relationship between the plurality of hardware logic levels by using an allocation rule that a loop level of the target loop code matches a level of the hardware logic level    S3025

Split each level of target loop code based on a length upper limit of the hardware logic level corresponding to the level of target loop code to obtain a plurality of code blocks, and combine the plurality of code blocks into a plurality of pieces of multidimensional subloop code based on a level relationship between hardware logic levels corresponding to the plurality of code blocks    S303

Update the multidimensional loop code to a vector instruction based on the plurality of pieces of multidimensional subloop code and the attribute information    S304

FIG. 4

FIG. 5

## INTERNATIONAL SEARCH REPORT

| International application No. |
|---|
| **PCT/CN2024/082998** |

**A.    CLASSIFICATION OF SUBJECT MATTER**

G06F8/41(2018.01)i

According to International Patent Classification (IPC) or to both national classification and IPC

**B.    FIELDS SEARCHED**

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CJFD, CNTXT, DWPI, ENTXT, ENTXTC, VEN, WPABS, WPABSC, CNKI: 编译, 层, 多维, 分, 分块, 分区, 划分, 切分, 向量, 循环, compil+, layer, multi+, dimension+, split+, part+, vector+, loop+

**C.    DOCUMENTS CONSIDERED TO BE RELEVANT**

| Category* | Citation of document, with indication, where appropriate, of the relevant passages | Relevant to claim No. |
|---|---|---|
| A | CN 111857727 A (XI'AN JIAOTONG UNIVERSITY) 30 October 2020 (2020-10-30) entire document | 1-16 |
| A | CN 115469931 A (BEIJING ENFLAME INTELLIGENT TECHNOLOGY CO., LTD.) 13 December 2022 (2022-12-13) entire document | 1-16 |
| A | CN 116450138 A (NATIONAL UNIVERSITY OF DEFENSE TECHNOLOGY OF PLA) 18 July 2023 (2023-07-18) entire document | 1-16 |
| A | US 2019243625 A1 (MICROSOFT TECHNOLOGY LICENSING, LLC) 08 August 2019 (2019-08-08) entire document | 1-16 |
| A | US 2021373865 A1 (BLAIZE, INC.) 02 December 2021 (2021-12-02) entire document | 1-16 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 May 2024** | **16 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

| Patent document cited in search report | | | Publication date (day/month/year) | Patent family member(s) | | | Publication date (day/month/year) |
|---|---|---|---|---|---|---|---|
| CN | 111857727 | A | 30 October 2020 | None | | | |
| CN | 115469931 | A | 13 December 2022 | None | | | |
| CN | 116450138 | A | 18 July 2023 | None | | | |
| US | 2019243625 | A1 | 08 August 2019 | US | 11068247 | B2 | 20 July 2021 |
| US | 2021373865 | A1 | 02 December 2021 | US | 2022164190 | A1 | 26 May 2022 |
| | | | | US | 2022229643 | A1 | 21 July 2022 |
| | | | | US | 11640285 | B2 | 02 May 2023 |
| | | | | US | 11327733 | B2 | 10 May 2022 |

Form PCT/ISA/210 (patent family annex) (July 2022)

28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311128725